# FASCICULE DE BREVET EUROPEEN

(11) **EP 0 626 292 B1**
(45) Date de publication et mention de la délivrance du brevet: **28.08.1996**
(21) Numéro de dépôt: 94400806.9
(22) Date de dépôt: 13.04.1994
(51) Int. Cl.: B60N 2/46

(54) **Siège de véhicule comportant un écran escamotable dans l'accoudoir**
Fahrzeugsitz mit zurückklappbarem Bildschirm in der Armlehne
Vehicle seat with retractable display in the armrest

(30) Priorité: 26.05.1993 FR 9306315
(43) Date de publication de la demande: 30.11.1994
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert René, F-75116 Paris (FR)
(74) Mandataire: Derambure, Christian

(56) Documents cités:
- EP-A- 0 411 149
- EP-A- 0 423 349
- US-A- 5 076 524
- PATENT ABSTRACTS OF JAPAN vol. 15, no. 494 (E-1145) 13 Décembre 1991 & JP-A-32 014 980 (MATSUSHITA)
- PATENT ABSTRACTS OF JAPAN vol. 14, no. 575 (M-1062) 20 Décembre 1990 & JP-A-02 249 734 (VICTOR)

## Description

L'invention concerne un siège de passager de véhicule de transport en commun - notamment d'avion - comprenant au moins un accoudoir et au moins un écran individuel associé à l'accoudoir permettant à chaque passager de regarder sur un écran qui lui est propre un programme de divertissement ou d'information qu'il peut choisir individuellement (voir par exemple US-A-5 076 524, correspondant au préambule de la revendication indépendante).

Les sièges d'avions de ligne de première classe ou de classe affaire sont déjà parfois équipés d'écran individuel associé aux accoudoirs par un bras articulé.

Néanmoins, mêmes dans les sièges connus, les manoeuvres d'escamotage et de déploiement nécessitent de disposer d'une place suffisante à l'avant de l'accoudoir. Ils sont donc généralement considérés comme trop volumineux, peu ergonomiques et peu commodes d'emploi. De plus, l'écran doit à la fois pouvoir être placé en face du passager assis, sans pour autant constituer un obstacle susceptible de blesser le passager en cas de choc ou de freinage brutal.

L'invention vise donc à pallier ces inconvénients et à proposer un siège de passager comportant un écran qui ne nécessite aucun espace libre à l'avant de l'accoudoir.

L'invention a également pour but de proposer un tel siège équipé d'un écran escamotable dont les commandes de déploiement et d'escamotage sont plus faciles, plus ergonomiques et en particulier, qui peuvent être réalisées par le passager sans que celui-ci ait à changer de position. L'invention vise ainsi à proposer un tel écran qui puisse être escamoté ou déployé alors même que le passager reste assis, par exemple y compris lorsque il prend ses repas ou une consommation avec une tablette de cocktail devant lui.

L'invention vise également à proposer un tel siège dans lequel la manoeuvre de déploiement de l'écran ne nécessite pas d'effort particulier de la part du passager.

Simultanément l'invention vise à proposer un tel siège dans lequel l'écran, en position déployée ne constitue pas un obstacle dangereux pour le passager.

Enfin, l'invention vise à proposer un tel siège dans lequel le mécanisme d'articulation de l'écran est simple, peu coûteux et léger.

Pour ce faire, l'invention concerne un siège tel que décrit dans la revendication indépendante. D'autres caractéristiques de l'invention sont décrites dans les revendications dépendantes.

D'autres caractéristiques, avantages de l'invention apparaîtront à la lecture de la description suivante qui se refère aux figures annexées :
- la figure 1 est une section verticale d'un accoudoir d'un siège selon l'invention illustrant l'écran dans diverses positions escamotées et déployées.
- les figures 2 et 3 sont des perspectives illustrant diverses positions de l'écran en position déployée d'un siège selon l'invention.
- la figure 4 est une vue de détail aggrandie selon la flèche F de la figure 1 illustrant un dispositif de verrouillage de la platine d'un siège selon l'invention.

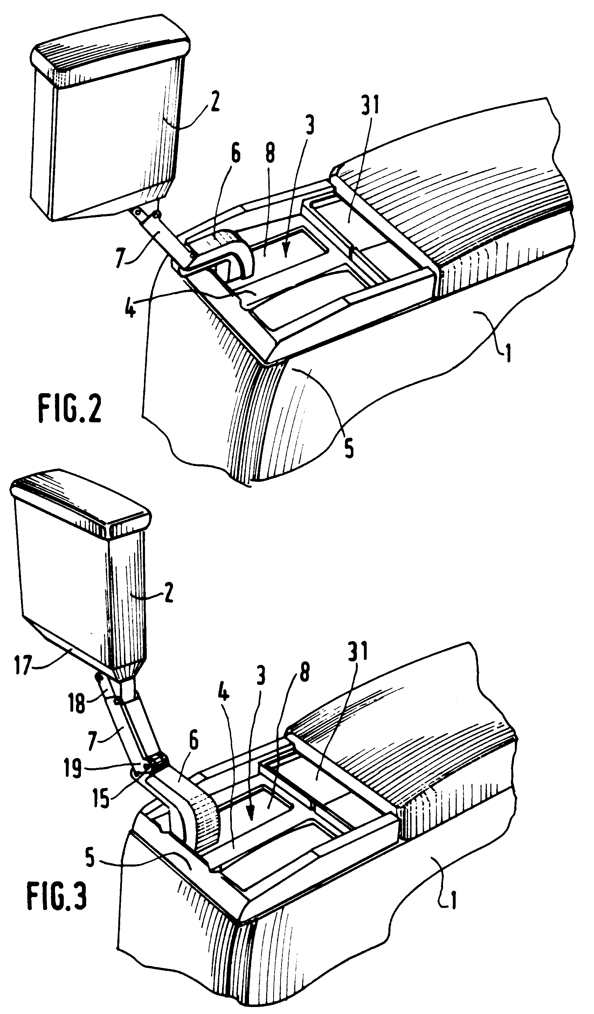

Sur les figures, on a représenté partiellement un accoudoir 1 de siège de passager de véhicule de transport en commun - notamment d'avion. Le siège comprend pour chaque place assise un écran individuel 2 associé à l'accoudoir 1. L'accoudoir 1 représenté sur les figures 2 et 3 est un accoudoir central qui peut comporter deux écrans l'un à côté de l'autre destinés respectivement aux passagers des places assises séparées par l'accoudoir.

L'écran 2 est monté escamotable dans l'accoudoir 1 à travers une lumière 3 ménagée dans une paroi supérieure 4 de la partie antérieure 5 de l'accoudoir 1. L'écran 2 est monté par un bras articulé 6, 7 à une platine 8 horizontale guidée en translation verticale à l'intérieur de la partie antérieure 5 de l'accoudoir 1. La platine 8 est guidée dans l'accoudoir 1 grâce à deux colonnes 9, 10 de guidage verticales s'étendant à l'avant et à l'arrière de la platine 8 qui est montée coulissante sur ces colonnes 9, 10 grâce à des palliers 11, 12 solidaires de la platine 8.

Le bras articulé 6, 7 comporte un coude 6 articulé à la platine 8 autour d'un axe vertical 13, et une bielle 7 articulée à l'extrémité 14 du coude 6 autour d'un axe horizontal 15. L'extrémité 14 du coude 6 articulée à la bielle 7 est une extrémité 14 d'une portion horizontale 16 du coude 6. L'écran 2 est articulé par sa partie inférieure 17 à l'extrémité 18 de la bielle opposée à l'extrémité 19 de la bielle articulée au coude 6.

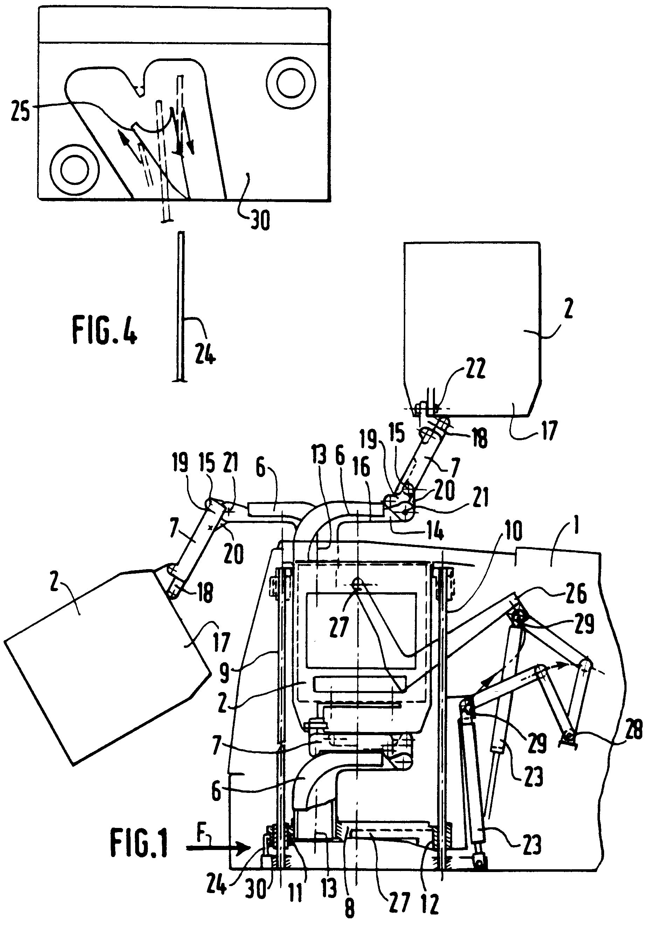

L'articulation de la bielle 7 au coude 6 comporte une butée 20 limitant le déploiement de cette bielle 7 par rapport au coude 6 autour de l'axe 15 normal horizontal de pivotement. De plus, un deuxième axe 21 d'articulation parallèle à cet axe 15 normal de pivotement relie la butée 20 à l'extrémité 14 du coude 6. Ce deuxième axe 21 d'articulation comprend des moyens de serrage axial, par exemple sous la forme d'un boulon et de rondelles de serrage, qui n'autorisent un pivotement de la bielle 7 par rapport au coude 6 au delà de sa position déployée contre la butée 20 que lorsque le couple de pivotement dépasse une valeur prédéterminée. Ainsi, en cas de choc, l'écran est rabattu vers l'avant dans la position indiquée sur la partie gauche de la figure 1.

Par ailleurs, l'écran 2 est articulé à l'extrémité 18 de la bielle 7 autour d'un axe 22 horizontal qui est orthogonal à l'axe 15 d'articulation de la bielle 7 au coude 6. On peut ainsi incliner l'écran 2 pour l'orienter vers le passager.

La platine 8 est rappelée par un moyen 23 de rappel élastique dans sa position supérieure dans laquelle l'écran 2 est déployé à l'extérieur de l'accoudoir 1. Ce moyen 23 de rappel peut être constitué comme représenté d'un verin pneumatique dont le cylindre est fermé et rempli d'air en position déployée. Le moyen 23 de rappel est associé d'un côté à la structure fixe du siège, et de l'autre, à un système de bielles 26 dont une extrémité 27 est articulée à la platine 8 et dont une autre extrémité 28 est articulée à la structure fixe.

Le siège comporte en outre un dispositif 24, 25 de verrouillage de la platine 8 en position inférieure d'escamotage de l'écran 2 à l'intérieur de l'accoudoir 1. Le dispositif 24, 25 de verrouillage est un dispositif commandé au verrouillage et au déverrouillage par une pression verticale vers le bas exercée sur l'écran 2, et donc sur la platine 8. Ce dispositif 24, 25 de verrouillage est constitué d'une languette 24 élastique en flexion ancrée par l'une de ses extrémités solidaire de l'accoudoir 1, et dont l'autre extrémité libre 29 est en forme de crochet coopérant avec une portée 25 solidaire de la platine 8. En variante non représentée, la languette 24 peut être montée solidaire de la platine 8, et la portée 25 solidaire de l'accoudoir 1. Le dispositif 24, 25 de verrouillage est représenté plus en détail à la figure 4. La portée 25 est constituée d'une portée centrale d'une rainure en forme générale de coeur incliné par rapport à la verticale, ménagée dans un bloc 30 monté solidaire de la platine 8. La languette 24 s'étend au repos au moins sensiblement verticalement. On a représenté en pointillés les diverses positions de l'extrémité libre 29 de la languette 23 lors de son engagement dans la rainure du bloc 30 au cours du verrouillage, puis du maintien en position verrouillée et du déverrouillage.

Le coude 6 est articulé autour de l'axe vertical 13 par rapport à la platine 8 par des moyens d'articulation qui réalisent un blocage de la platine 8 en position supérieure par rapport à la paroi supérieure 4 dès que le coude 6 est pivoté autour de l'axe vertical 13 à partir de sa position orientée vers l'arrière qu'il occupe lorsque l'écran 2 est escamoté à l'intérieur de l'accoudoir 1. Ce blocage peut être réalisé par un jeu de bagues de forme appropriée et par une gâche montée sous la paroi 4.

L'écran 2 est monté par rapport à l'accoudoir 1 de façon à affleurer la paroi supérieure 4 de l'accoudoir 1 lorsqu'il est en position escamotée à l'intérieur de l'accoudoir 1 comme représenté à la figure 1. La partie supérieure de l'écran 2 peut comporter un coussin comme représenté sur les figures 2 et 3 pour venir en prolongement d'un coussin recouvrant la partie postérieure de l'accoudoir 1. L'accoudoir 1 comporte également des tablettes 31 coulissantes, escamotables sous le coussin de l'accoudoir 1 et venant recouvrir en position déployée la lumière 3.

Dans le cas où l'écran 2 ne comporte pas de coussin à sa partie supérieure, la tablette 31 peut venir recouvrir l'écran 2 lorsqu'il est escamoté.

Pour déployer l'écran 2 à partir de sa position escamotée représentée à la figure 1, le passager n'a qu'à appuyer par une pression verticale vers le bas sur l'écran 2 comme sur un bouton poussoir. Lorsqu'il relâche la pression, l'écran 2 remonte jusqu'à ce que la platine 8 vienne affleurer la paroi 4 supérieure. Le passager déploie alors la bielle 7 par rapport au coude 6 sur lequel elle était préalablement repliée, jusqu'à la position représentée à la partie supérieure de la figure 1. Il fait ensuite pivoter le coude 6 autour de l'axe vertical 13 jusqu'à la position désirée (figure 3) dans laquelle il peut observer l'écran 2. A partir de cette position, si l'utilisateur veut quitter son siège, il lui suffit de repousser l'écran vers l'avant, le coude 6 pivotant vers l'avant autour de l'axe 13 jusqu'à la position de la figure 2. Si le passager subit une décélération importante et brusque à partir de la position de la figure 3, l'écran 2 est tout d'abord repoussé par pivotement de l'axe 13 jusqu'à la position de la figure 2, puis la bielle 7 pivote autour de l'axe 21 comme représenté sur la partie gauche de la figure 1. Pour escamoter l'écran 2 à l'intérieur de l'accoudoir 1, on procède aux opérations inverses.

## Revendications

1. Siège de passagers de véhicule de transport en commun - notamment d'avion - comprenant au moins un accoudoir (1) et au moins un écran individuel (2) associé à l'accoudoir (1), l'écran (2) étant monté escamotable à travers une lumière (3) ménagée dans une paroi supérieure (4) de la partie antérieure (5) de l'accoudoir (1), et l'écran (2) étant associé par un bras articulé (6, 7) à une platine (8) guidée en translation verticale à l'intérieur de la partie antérieure (5) de l'accoudoir (1),
caractérisé en ce qu'en combinaison :
- la platine (8) est montée coulissante sur deux colonnes de guidage (9, 10) disposées, à l'intérieur de l'accoudoir (1), sensiblement perpendiculairement à la paroi supérieure (4) de l'accoudoir (1) et de part et d'autre de la platine (8), la platine (8) s'étendant sensiblement parallèlement à la paroi supérieure (4) de l'accoudoir (1) ;
- le bras articulé (6, 7) comporte un coude (6) articulé par une de ses extrémités à la platine (8) autour d'un axe vertical (13) et une bielle (7) articulée par une (19) de ses extrémités (18, 19) à l'autre extrémité (14) du coude (6) autour d'un axe horizontal (15) ; et
- l'écran (2) est articulé par sa partie inférieure (17) à l'autre extrémité (18) de la bielle (7), qui est opposée à l'extrémité (19) de la bielle (7), articulée au coude (6).

2. Siège selon la revendication 1, caractérisé en ce que l'articulation de la bielle (7) au coude (6) comporte une butée (20) limitant le déploiement de la bielle (7) par rapport au coude (6) autour de l'axe (15) normal de pivotement, et un deuxième axe (21) d'articulation, parallèle à l'axe normal de pivotement (15) et comprenant des moyens de serrage autorisant un pivotement de la bielle (7) par rapport au coude (6) au-delà de la butée (20) uniquement lorsque le couple de pivotement dépasse une valeur prédéterminée.

3. Siège selon la revendication 1 ou 2, caractérisé en ce que l'écran (2) est articulé à l'extrémité (18) de la bielle (7) autour d'un axe (22) horizontal, orthogonal à l'axe (15) d'articulation de la bielle (7) au coude (6).

4. Siège selon l'une quelconque des revendications 1 à 3, caractérisé en ce que la platine (8) est rappelée par un moyen (23) de rappel élastique dans sa position supérieure, dans laquelle l'écran (2) est déployé à l'extérieur de l'accoudoir (1), et en ce qu'il comporte un dispositif (24, 25) de verrouillage de la platine (8) en position inférieure, dans laquelle l'écran (2) est escamoté dans l'accoudoir (1).

5. Siège selon la revendication 4, caractérisé en ce que le dispositif de verrouillage (24, 25) est commandé au verrouillage et au déverrouillage par une pression verticale vers le bas, exercé sur l'écran (2), et donc sur la platine (8).

6. Siège selon la revendication 4 ou 5, caractérisé en ce que le dispositif de verrouillage (24, 25) est constitué d'une languette élastique (24) solidaire de l'accoudoir (1) ou de la platine (8), ayant une extrémité libre (29) en forme de crochet coopérant avec une portée (25) solidaire de la platine (8) ou de l'accoudoir (1).

7. Siège selon l'une quelconque des revendications 1 à 6, caractérisé en ce que l'écran (2) est monté par rapport à l'accoudoir (1) de façon à affleurer la paroi supérieure (4) de l'accoudoir (1) lorsqu'il est en position escamotée à l'intérieur de l'accoudoir.

## Claims

1. A passenger seat for a public transport vehicle - in particular for an aeroplane - comprising at least one arm-rest (1) and at least one individual screen (2) associated with the arm-rest (1), the screen (2) being mounted to retract through a slot (3) provided in a top wall (4) of the front portion (5) of the arm-rest (1), and the screen (2) being associated via a hinged jib (6, 7) to a plate (8) which is guided to move in vertical translation inside the front portion (5) of the arm-rest (1),
the seat being characterized by the following, in combination:
• the plate (8) is slidably mounted on two guide columns (9, 10) disposed inside the arm-rest (1) substantially perpendicularly to the top wall (4) of the arm-rest (1) and at opposite ends of the plate (8), the plate (8) extending substantially parallel to the top wall (4) of the arm-rest (1);
• the hinged jib (6, 7) comprises an angled rod (6) hinged at one end about a vertical axis (13) to the plate (8), and a link rod (7) hinged at one of its ends (19 of 18, 19) about a horizontal axis (15) to the other end (14) of the angled rod (6); and
• the screen (2) is hinged via its bottom portion (17) to the other end (18) of the link rod (7) that is remote from the end (19) of the link rod (7) which is hinged to the angled rod (6).

2. A seat according to claim 1, characterized in that the hinge between the link rod (7) and the angled rod (6) includes a stop (20) that limits deployment of the link rod (7) relative to the angled rod (6) about the normal pivot axis (15), and a second hinge axis (21) parallel to the normal pivot axis (15), and including clamping means enabling the link rod (7) to pivot relative to the angled rod (6) beyond the stop (20), but only when the pivoting torque exceeds a predetermined value.

3. A seat according to claim 1 or 2, characterized in that the screen (2) is hinged at the end (18) of the link rod (7) about a horizontal axis (22), orthogonal to the axis (15) of the hinge between the link rod (7) and the angled rod (6).

4. A seat according to any one of claims 1 to 3, characterized in that the plate (8) is urged by resilient return means (23) towards its high position, in which the screen (2) is deployed outside the arm-rest (1), and in that it includes a locking device (24, 25) for locking the plate (8) in its low position, in which the screen (2) is retracted into the arm-rest (1).

5. A seat according to claim 4, characterized in that the locking device (24, 25) is caused to lock and unlock by applying vertical downward pressure on the screen (2), and thus on the plate (8).

6. A seat according to claim 4 or 5, characterized in that the locking device (24, 25) is constituted by a resilient tongue (24) secured to the arm-rest (1) or to the plate (8), and having a hook-shaped free end (29) co-operating with a bearing surface (25) secured to the plate (8) or to the arm-rest (1).

7. A seat according to any one of claims 1 to 6, characterized in that the screen (2) is mounted relative to the arm-rest (1) in such a manner as to be flush with the top wall (4) of the arm-rest (1) when the screen is in its retracted position inside the arm-rest.

## Patentansprüche

1. Sitz für Passagiere von Fahrzeugen der öffentlichen Verkehrsmittel - insbesondere von Flugzeugen - mit wenigstens einer Armlehne (1) und wenigstens einer der Armlehne (1) zugeordneten individuellen Leinwand (2), wobei die Leinwand (2) durch ein in der oberen Wand (4) des Vorderteiles (5) der Armlehne (1) eingebrachtes Langloch (3) klappbar montiert ist und wobei die Leinwand (2) über einen Gelenkarm (6, 7) einer Halteplatte (8) zugeordnet ist, die in vertikaler Verschiebungsrichtung innerhalb des Vorderteiles (5) der Armlehne (1) geführt ist,
dadurch gekennzeichnet, daß in Kombination
- die Halteplatte (8) auf zwei Führungssäulen (9, 10) verschieblich aufgebaut ist, die innerhalb der Armlehne (1) wesentlich senkrecht zu der oberen Wand (4) der Armlehne (1) und auf beiden Seiten der Halteplatte (8) angeordnet sind, wobei die Halteplatte (8) sich wesentlich parallel zu der oberen Wand (4) der Armlehne (1) erstreckt;
- der Gelenkarm (6, 7) ein am einem seiner Enden mit der Halteplatte (8) um eine vertikale Achse (13) gelenkig verbundenes Kniestück (6) und eine an einem (19) ihrer Enden (18, 19) mit dem anderen Ende (14) des Kniestückes (6) um eine horizontale Achse (15) gelenkig verbundene Koppel (7) aufweist, und
- die Leinwand (2) an ihrem unteren Teil (17) mit dem anderen Ende (18) der Koppel (7) gelenkig verbunden ist, das dem Ende (19) der mit dem Kniestuck (6) gelenkig verbundenen Koppel (7) entgegengesetzt ist.

2. Sitz nach Anspruch 1, dadurch gekennzeichnet, daß das Gelenk der Koppel (7) zu dem Kniestückes (6) einen Anschlag (20) zur Begrenzung des Ausklappens der Koppel (7) relativ zu dem Kniestück (6) um die normale Schwenkachse (15) und eine zweite Gelenkachse (21) aufweist, die parallel zu der normalen Schwenkachse (15) verläuft und Klemmvorrichtungen besitzt, die das Schwenken der Koppel (7) relativ zu dem Kniestuck (6) über den Anschlag (20) hinaus nur zuläßt, wenn das Schwenkmoment einen vorgeschriebenen Wert übersteigt.

3. Sitz nach Anspruch 1 oder 2, dadurch gekennzeichnet, daß die Leinwand (2) mit dem Ende (18) der Koppel (7) um eine zu der Gelenkachse (15) der mit dem Kniestück (6) in gelenkiger Verbindung stehenden Koppel (7) rechtwinklige horizontale Achse (22) gelenkig verbunden ist.

4. Sitz nach irgendeinem von den vorhergehenden Anspruchen 1 bis 3, dadurch gekennzeichnet, daß die Halteplatte (8) durch ein Rückstellfedermittel (23) in seine obere Stellung zurückgebracht wird, in welcher die Leinwand (2) aus der Armlehne (1) herausgefahren ist und daß er eine Verriegelungsvorrichtung (24, 25) zur Verriegelung der Halteplatte (8) in ihrer unteren Stellung aufweist, in welcher die Leinwand (2) in die Armlehne (1) hineingefahren ist.

5. Sitz nach Anspruch 4, dadurch gekennzeichnet, daß die Verriegelungsvorrichtung (24, 25) bei Verriegelung und Freigabe durch einen auf die Leinwand (2) und so auf die Halteplatte (8) vertikal nach unten ausgeübten Druck gesteuert wird.

6. Sitz nach Anspruch 4 oder 5, dadurch gekennzeichnet, daß die Verriegelungseinrichtung (24, 25) aus einer an der Armlehne (1) bzw. der Halteplatte (8) ortsfest befestigten federnden Lasche (24) besteht, deren hakenförmiges freies Ende (29) mit einer ortsfest an der Halteplatte (8) oder der Armlehne (1) angebrachten Tragfläche (25) zusammenwirkt.

7. Sitz nach irgendeinem von den vorhergehenden Ansprüchen 1 bis 6, dadurch gekennzeichnet, daß die Leinwand (2) relativ zu der Armlehne (1) derart aufgesetzt ist, daß sie in eingefahrener Stellung innerhalb der Armlehne mit der oberen Wand (4) der Armlehne bündig zur Anlage kommt.
